# EUROPEAN PATENT APPLICATION

(11) **EP 4 524 811 A1**
(43) Date of publication of application: **19.03.2025**
(21) Application number: 23197157.3
(22) Date of filing: 13.09.2023
(51) Int. Cl.: G06K 7/10

(54) **RF COMMUNICATION DEVICE FOR ADAPTIVE DETECTION OF FURTHER RF COMMUNICATION DEVICES**

(71) Applicant: NXP B.V., 5656 AG Eindhoven (NL)
(72) Inventor: Vorraber, Marcel Philipp, 5656 AG Eindhoven (NL); Haslinger, Dorian, 5656 AG Eindhoven (NL); Neophytou, Kyriakos, 5656 AG Eindhoven (NL)
(74) Representative: Krott, Michel

(57) **Abstract**

There is described a radio frequency, RF, communication device (100) for detecting a further RF communication device (130, 140) being an active further RF communication device (130) and/or a passive further RF communication device (140), the RF communication device (100) comprising:
i) an RF transmission device (110), configured to transmit RF signals to be received by the at least one further RF communication device (130, 140); and
ii) an adaptive detection device (120), coupled to the RF transmission device (110), and configured to:
iia) trigger a transmission of a first RF signal (111),
iib) trigger a transmission of a second RF signal (112), and
iic) detect the active further RF communication device (130) based on the first RF signal (111) and/or the passive further RF communication device (140) based on the second RF signal (112);
iii) wherein one of the first RF signal (111) and the second RF signal (112) is transmitted subsequently to the other, and
iv) wherein a first energy level of the first RF signal (111) is at least 25%, in particular at least 50%, in particular at least 90%, higher than a second energy level of the second RF signal (112).

## Description

### TECHNICAL FIELD

The present disclosure relates to a radio frequency (RF) communication device with an RF transmission device and an RF adaptive detection device. The present disclosure further relates to an RF communication system that comprises the RF communication device and an active and/or passive further RF communication device. The disclosure also relates to a method of operating such an RF communication system. The disclosure may hence relate to the technical field of radio frequency devices such as RFID and NFC communication applications.

### TECHNICAL BACKGROUND

Radio frequency (RF) transmitting and/or receiving devices are widely used to enable communication between electronic devices. A specific example of a radio device may be an RFIC device and/or an NFC device. These devices are used in a variety of applications including, for example, smartcards or smartphones, to establish radio communication with each other by touching them together or bringing them into close proximity, for example within a short distance such as a few meters or only several centimeters. Applications include, among others, contactless transactions, data exchange, and simplified setup of more complex communications such as Wi-Fi or Bluetooth. Some of the applications involving identification products such as smart cards and tags are used in endeavors such as transport (e.g. ticketing, road tolling, baggage tagging), finance (e.g. debit and credit cards, electronic purse, merchant card), communications (e.g. SIM card for GSM phone), and tracking (e.g., access control, inventory management, asset tracking).

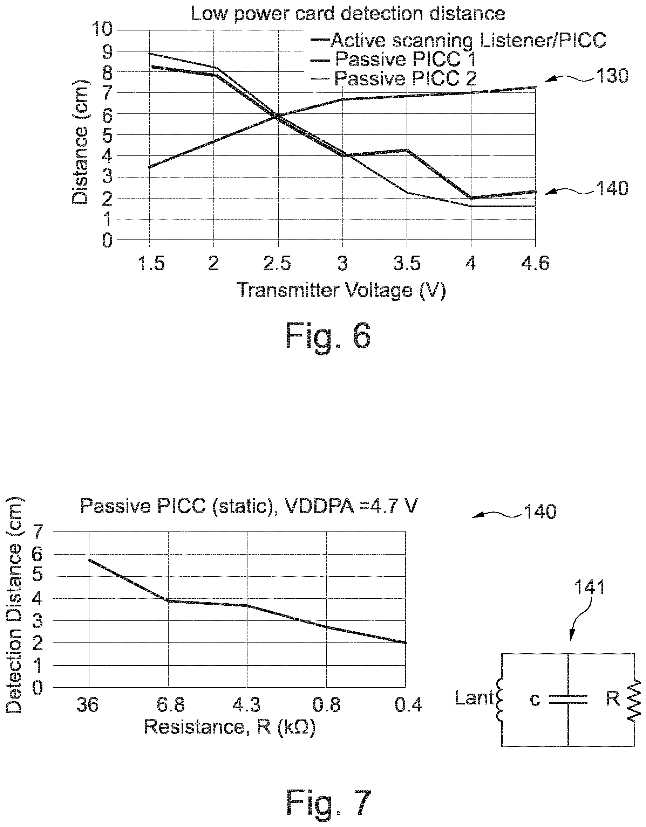

In many RF, in particular NFC, applications, a first RF device detects the presence of a second RF device. For this purpose, RF signals are transmitted by the first RF device to be received by the second RF device. Hereby, the second RF device can be an active device or a passive device. Conventionally, the transmitted RF signals are either configured for the detection of an active RF device or configured for the detection of a passive RF device. **Figure 6** illustrates a comparison between the ranging/detection distance (in cm) and the optimum energy level (here shown as transmitter voltage V) of an active further RF communication device 130 and the passive further RF communication device 140. Said devices 130m 140 represent here the above-mentioned second RF device that is to be detected by the first RF device. It can be said that, the longer the distance, the more efficient can the detection be. Thus, it may be desired to achieve a long detection distance, when searching for the presence of a further RF communication device by an RF communication device. However, it can be seen from Figure 6 that the active further RF communication device 130 and the passive further RF communication device 140 show behavior completely opposite to each other: while the optimum (large detection distance) for the active RF communication device 130 is at higher energy levels, the optimum for the passive RF communication device 140 is at lower energy levels.

In other words, state of the art low power card detection (LPCD) usually implements low voltage for the transmitter driver. This not only to save current consumption but also because no detection performance is sacrificed with passive (NFC) communication devices (e.g. PICCs, mobile phones etc.). However, active communication devices can implement active scanning functionalities that can sense LPCD pulses coming from the detection device and generate its own pulses that match to that generated by the detection device and cause a detection. As it can be seen in Figure 6, for detecting active scanning communication devices, the detection distance is much higher, when a higher transmitter voltage is used by the detection device. On the other hand, for passive communication devices, the detection distance is much higher when a lower transmitter vorlage is used by the detection device.

**Figure 7** illustrates the behavior of a passive further RF communication device 140 at different magnetic field levels. This is because the internal impedance of proximity inductive coupling card (PICC)'s antenna 141 pins changes with different input current, namely the C and R values of its equivalent circuit. Figure 7 shows the wake-up distance of a passive PICC static device (as the passive further RF communication device 140) when different input impedance is implemented. In the Figure shown, the behavior of a passive further RF communication device 140 in different magnetic field levels is emulated. In general, it can be observed that the detection distance is increased with higher resistance, R. Thus, the detection distance is influenced by the input impedance of the passive further RF communication device PICC's antenna pins.

### SUMMARY OF THE DISCLOSURE

There may be a need to provide a detection of a further RF communication device, in particular an active and/or passive further RF communication device, in an efficient and reliable manner.

An RF communication device, an RF communication system, and a method are provided.

According to an aspect of the present disclosure, it is described a radio frequency (RF) communication device (e.g. a reader device) for detecting a further RF communication device being an active further RF communication device (e.g. a mobile phone) and/or a passive further RF communication device (e.g. a tag), the RF communication device comprising:
i) an RF transmission device (e.g. an NFC antenna), configured to transmit RF signals to be received by the at least one further RF communication device; and
ii) an adaptive detection device (e.g. a processor, an integrated circuit, a control device), coupled to the RF transmission device, and configured to:
   iia) trigger/control (the RF transmission device to perform) a transmission of a first RF signal (high energy signal),
   iib) trigger/control (the RF transmission device to perform) a transmission of a second RF signal (low energy signal), and
   iic) detect the active further RF communication device based on the first RF signal and/or the passive further RF communication device based on the second RF signal;
iii) wherein one of the first RF signal and the second RF signal is transmitted subsequently to the other (in particular transmitted alternatingly), and
iv) wherein a first energy level of the first RF signal is at least 25%, in particular at least 50%, in particular at least 90%, more in particular at least 95%, more in particular at least 100 %, higher than a second energy level of the second RF signal.

According to a further aspect of the present disclosure, it is described an RF communication system, comprising: an RF communication device as described above, and the at least one further RF communication device.

According to a further aspect of the present disclosure, it is described a method for operating a radio frequency (RF) communication system, the method comprising:
i) transmitting a first RF signal;
ii) transmitting a second RF signal; and
iii) detecting an active further RF communication device based on the first RF signal and/or a passive further RF communication device based on the second RF signal;
   a) wherein one of first RF signal and the second RF signal is transmitted subsequently to the other, and
   b) wherein a first energy level of the first RF signal is at least 25%, in particular at least 50%, in particular at least 95%, higher than a second energy level of the second RF signal.

According to a further aspect of the present disclosure, there is described a use (method of using) an RF signal sequence, wherein at least two RF pulses have a different power level, in order to optimize detection of both, an active further RF communication device and a passive further RF communication device, with one and the same RF pulse/signal sequence.

According to an exemplary embodiment, the disclosure may be based on the idea that a detection of a further RF communication device, in particular an active and/or passive further RF communication device, can be done by an RF communication device in an efficient and reliable manner, when the RF communication device transmits at least two RF signals with different energy levels, wherein a high energy level RF signal is optimized for detecting the active further RF communication device, while a low energy RF signal is optimized for detecting the passive RF further communication device.

Conventionally, an RF detection device is either configured (optimized) for detecting a passive further device using low energy signals, or for detecting an active further device using high energy signals. Thereby, the RF detection device cannot be used efficiently, in particular not in a low power card detection (LPCD) scheme.

However, it has been found by the inventors that a surprisingly efficient and reliable detection of both, the active device and the passive device, can be realized, when two RF signals of different energy levels are applied within one and the same RF (pulse) sequence. In this manner, an operation in the LPCD scheme is possible, thereby saving energy and costs, while an adaptive and optimized detection is enabled. In order to adapt the detection to the optimum, there is not an average signal generated, but instead signals of significantly different energy levels may be applied within one and the same RF signal sequence.

The described adaptive (LPCD) approach may be seen as a methodology to enable (LPCD) signals/pulses with different voltage/power in low power mode. This may allow high performance for passive devices and active (scanning) devices, and optimize the current consumption. This may further increase the user experience regarding long distance, while the power consumption may be lowered (battery lifetime). A preferred application may be seen in car access applications, e.g. with very small door handle antennas.

The aspects defined above and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

### EXEMPLARY EMBODIMENTS

According to an embodiment, the RF communication device is configured as a radio-frequency identification (RFID) device and/or a near field communication (NFC) device and/or the RF signals are configured as RFID and/or NFC signals. Thereby, economically important and standardized applications can be directly addressed. Due to the large difference in power levels and the limited space, the present disclosure may be especially suited for this application.

In the context of the present document, the term "RFID" (radio-frequency identification) may refer to a technique that uses electromagnetic fields (RF field) to communicate via short distances, in particular 10 meter or less. The term "RFID device" may refer to any device that has an RFID functionality. An RFID device may include an antenna and an integrated circuit with a transmitter and a receiver. A typical RFID system may include an RFID reader and one or more RFID tags which are associated to one or more objects. In an example, a first RFID device comprises a transmitter to transmit the RF signals to a second RFID device, and a receiver, to receive the modulated information of the second RFID device. The standard communication between RFID devices are specified in protocols.

In the context of the present document, the term "NFC" may refer to Near Field Communication which may be a short-range wireless technology (distances measured in centimeters). In order to make two NFC devices communicate, users may bring them close together or even make them touch. NFC may be considered as an established standard. In the present document, the NFC standard may be considered as a special form of RFID. In the context of the present document, the term "NFC device" may refer to any device that has an NFC functionality as described above. An NFC functionality may for example be implemented in a tag, a smart card, a card reader, or a mobile phone.

According to a further embodiment, the RF signals are configured as RF pulses. Thereby, the two energy levels may be efficiently separated in time, since they are realized as different pulses. Nevertheless, in an example, the two energy levels may also be merged into an extended pulse. In an exemplary example, a pulse of the first energy level may have 5 volts, while a pulse of the second energy level may have 1.5 volts. In a further exemplary example, the length of one pulse may be around 50 µs.

According to an embodiment, the adaptive detection device is further configured to: Trigger/control (the RF transmission device for) a transmission of a sequence of RF signals, that includes the first RF signal and the second RF signal. Accordingly, one and the same sequence can be optimized for both, detection of active and passive devices.

According to an embodiment, a plurality of first RF signals and a plurality of second RF signals are transmitted alternatingly in the RF sequence. Instead of periods that search for active devices and periods that search for passive devices, the described approach may enable search/detection of both devices in principle at the same time.

According to an embodiment, one first RF signal and one second RF signal are transmitted alternatingly. According to an embodiment, two or more first RF signals and two or more second RF signals are transmitted alternatingly. According to an embodiment, the first RF signal and the second RF signal are transmitted as an extended pulse with different energy levels. Depending on the desired application, one sequence may be more suitable than the others.

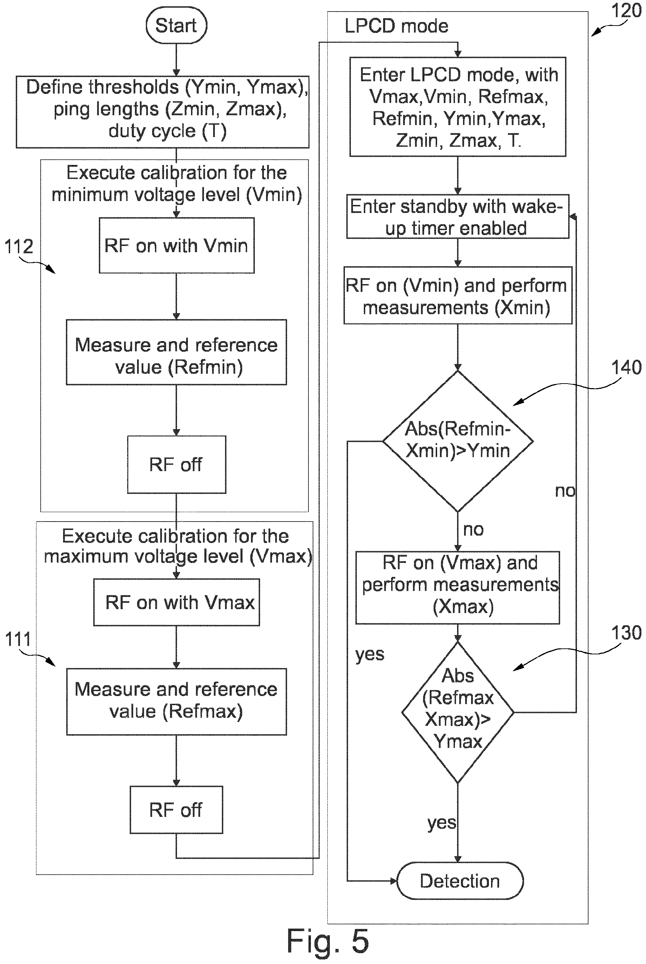

According to an embodiment, the adaptive detection device is further configured to:
perform a calibration with respect to the first energy level of the first RF signal and the second energy level of the second RF signal. According to an embodiment, the adaptive detection device is further configured to derive a first reference value (refmax) for the first energy level and/or derive a second reference value (refmin) for the second energy level. The adaptive (LPCD) calibration may be used for optimized receiver settings depending on RF power. An exemplary embodiment is described in Figure 5.

According to an embodiment, the at least one further RF communication device is configured as a passive device, in particular a passive smart card, more in particular a credit/debit card or a tag. Such a small and simple device may not comprise its own energy source. Thus, detection depends on the energy provided by the RF communication device. Yet, as shown in Figure 7, a lower energy level may be preferable for high performance detection.

According to an embodiment, the at least one further RF communication device is configured as an active device, in particular an active scanning device. For example, a mobile phone can be used that comprises its own energy sources. In particular, the active device may scan actively by itself for the RF communication device.

According to an embodiment, the first RF signal is optimized to detect the active device. According to an embodiment, the second RF signal is optimized to detect the passive device. According to an embodiment, optimization refers to the detection distance. As described in above, an optimum detection distance may be achieved by transmitting signals with different energy levels.

According to an embodiment, the further RF communication device is configured as at least one of: and RFID device, an NFC device, a tag, in particular an NFC tag or an RFID tag, a credit/debit card, a ticket, a point-of-sale (POS), a mobile phone, a proximity inductive coupling card (PICC). Thus, the described approach can be directly implemented into economically important devices.

According to an embodiment, the method further comprising: receiving the first RF signal by the active RF communication device, and then starting a first wake-up operation, and/or receiving the second RF signal by the passive RF communication device and then starting a second wake-up operation. Thereby, efficient detection (polling) and activation may be enabled.

According to an embodiment, the RF transmission is performed in a low power mode, in particular a low power communication mode, more in particular in low power card detection (LPCD) mode. Thereby, energy resources and costs may be saved. LPCD is an established standard, so that the disclosure can be directly implemented in economically important measures.

According to an embodiment, the energy level refers to the RF power, in particular different transmitter voltage levels.

According to an embodiment of the method, the calibration is performed before the actual detection mode is started.

According to an embodiment, the method is applied a vehicle-related application, in particular a car door opening related application.

According to an exemplary embodiment, an optimized performance for RF communication detection devices is described with (real) low power optimization.

### BRIEF DESCRIPTION OF THE DRAWINGS

Figure 1 illustrates an RF communication system, according to an exemplary embodiment of the present disclosure.
Figures 2, 3, and 4 respectively illustrate a sequence of RF signals, according to exemplary embodiments of the present disclosure.
Figure 5 illustrates a calibration method for a RF communication system, according to an exemplary embodiment of the present disclosure.
Figure 6 illustrates a comparison between the detection distance and the optimum energy level of the active and the passive further communication device, according to an exemplary embodiment of the present disclosure.
Figure 7 illustrates the behavior of a passive further communication device, according to an exemplary embodiment of the present disclosure.

### DETAILED DESCRIPTION OF THE DRAWINGS

Exemplary embodiments in the drawings are schematic.

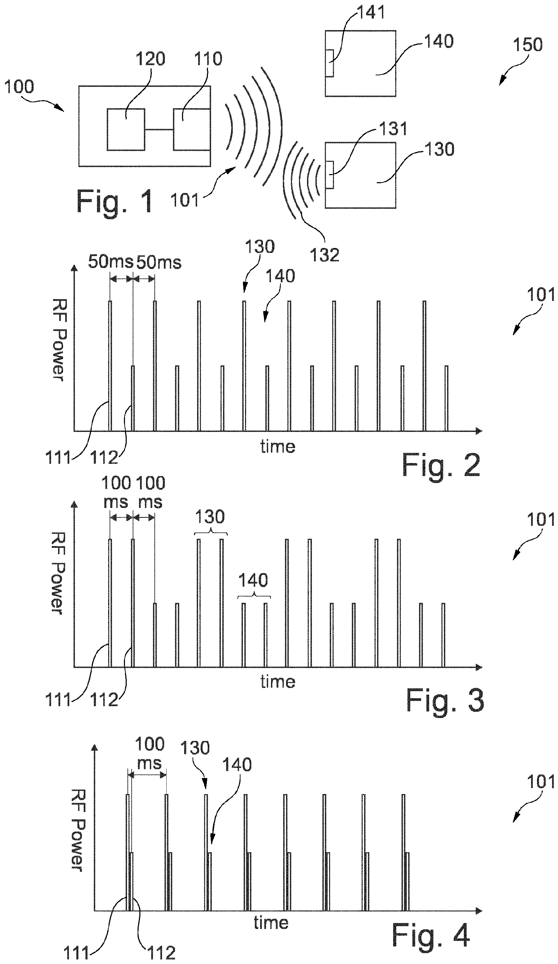

**Figure 1** illustrates an RF communication system 150, according to an exemplary embodiment of the present disclosure. The RF communication system 150 comprises an RF communication device (the detecting device) 100 and two further RF communication devices 130, 140. While one further RF communication device 140 is configured as a passive device, e.g. a passive smart card, the other further RF communication device 130 is configured as an active device, here an active scanning device.

The RF communication device 100 comprises an RF transmission device (e.g. an antenna device), configured to transmit a sequence 101 of RF signals to be received by the further RF communication devices 130, 140. The RF communication device 100 further comprises an adaptive detection device 120 (e.g. an IC and/or a processor), coupled to the RF transmission device 110. The adaptive detection device 120 is hereby configured to trigger the signal transmission by the RF transmission device 110. As will be described in detail for Figures 2 to 4, the sequence of RF signals comprises a plurality of first RF signals 111, and a plurality of second RF signals 112, transmitted in the sequence 101 subsequently one after the other.

The adaptive detection device 120 is configured to detect the presence (and initiate a wake-up) of the active further RF communication device 130 based on the first RF signal 111, being optimized (regarding the detection distance) for high energy levels. The adaptive detection device 120 is further configured to detect presence (and initiate a wake-up) of the passive further RF communication device 140 based on the second RF signal 112, being optimized for low energy levels.

The RF communication device 100 is configured here as a near field communication (NFC) device, the RF signals 111, 112 are configured as NFC signals in this example, and the RF signals 111, 112 are configured as NFC pulses. NFC has a standardized frequency of 13.56 MHz.

**Figure 2** illustrates a sequence 101 of RF signals, according to an exemplary embodiment of the present disclosure. The X-axis shows the time (arbitrary units) and the Y-axis shows the energy level as RF power (arbitrary units). In said sequence 101, a plurality of first RF signals 111 and a plurality of second RF signals 112 are transmitted alternatingly, wherein exactly one first RF signal 111 and exactly one second RF signal 112 are transmitted alternatingly; in other words: one after the other. It can be seen that a first energy level of the first RF signal 111 is 100% higher than a second energy level of the second RF signal 112, i.e. the second energy level is only half of the first energy level. It becomes clear that the first RF signals 111 are optimized for detecting the active further RF communication device 130 and the second RF signals 112 are optimized for detecting the passive further RF communication device 140. In this example, each RF signal is configured as a pulse, wherein the time duration between two pulses is 50 ms (as an exemplary time scheme).

Thus, instead of a conventional static RF energy level (power), an adaptive detection profile is used. By doing so, both, the passive and the active scanning further RF communication device 130, 140, can cause the highest possible wake-up distance with optimized low power current consumption. A sequence of changing the energy/power level pings is used with a dedicated detection sequence (two pulses).

**Figure 3** illustrates a further sequence 101 of RF signals, according to an exemplary embodiment of the present disclosure. The X-axis shows the time (arbitrary units) and the Y-axis shows the energy level as RF power (arbitrary units). In said sequence 101, a plurality of first RF signals 111 and a plurality of second RF signals 112 are transmitted alternatingly, wherein two first RF signals 111 and two RF signals 112 are transmitted alternatingly. It can be seen that a first energy level of the first RF signal 111 is 100% higher than a second energy level of the second RF signal 112, i.e. the second energy level is only half of the first energy level. The double first RF signals 111 are optimized for detecting the active further RF communication device 130 and the double second RF signals 112 are optimized for detecting the passive further RF communication device 140. In this example, each RF signal is configured as a pulse, wherein the time duration between two pulses is 100 ms (as an exemplary time scheme.

**Figure 4** illustrates a further sequence 101 of RF signals, according to an exemplary embodiment of the present disclosure. The X-axis shows the time (arbitrary units) and the Y-axis shows the energy level as RF power (arbitrary units). In said sequence 101, the first RF signal 111 and the second RF signal 112 are transmitted together as an extended pulse that comprises two different energy levels (combining both pulses to an extended pulse with different power levels).

**Figure 5** illustrates a calibration method for a RF communication system 150, according to an exemplary embodiment of the present disclosure. The adaptive detection device 120 is hereby configured to: perform a calibration with respect to the first energy level of the first RF signal 111 and the second energy level of the second RF signal 112, and to derive a first reference value (refmax) for the first energy level and/or derive a second reference value (refmin) for the second energy level.

In all three examples (see Figures 2 to 4 above), two different transmitter voltage levels (energy levels) are used, and therefore a dedicated calibration can be done for each voltage level. In general, a calibration is performed to derive the reference value of the LPCD measured parameter (e.g. RSSI, I, Q). Calibration takes then place before entering LPCD mode (the actual detection). If, during the LPCD mode, the measured LPCD parameter is higher or lower than the reference value by a specified threshold, then a wake-up will be triggered. Therefore, calibration and derivation of the reference values for both voltage levels used during LPCD mode is done.

### Reference signs

- 100: Radio frequency (RF) communication device
- 101: RF sequence of signals
- 110: RF transmission device
- 111: First RF signal
- 112: Second RF signal
- 120: Adaptive detection device
- 130: Active further RF communication device
- 131: Active antenna
- 132: Active scanning
- 140: Passive further RF communication device
- 141: Passive antenna
- 150: RF communication system

## Claims

1. A radio frequency, RF, communication device (100) for detecting at least one further RF communication device (130, 140) being at least one of:
an active further RF communication device (130),
a passive further RF communication device (140),
the RF communication device (100) comprising:
an RF transmission device (110), configured to transmit RF signals to be received by the at least one further RF communication device (130, 140); and
an adaptive detection device (120), coupled to the RF transmission device (110), and configured to:
trigger a transmission of a first RF signal (111),
trigger a transmission of a second RF signal (112), and
detect at least one of
the active further RF communication device (130) based on the first RF signal (111),
the passive further RF communication device (140) based on the second RF signal (112);
wherein one of the first RF signal (111) and the second RF signal (112) is transmitted subsequently to the other, and
wherein a first energy level of the first RF signal (111) is at least 25% higher than a second energy level of the second RF signal (112).

2. The RF communication device (100) according to claim 1,
wherein the RF communication device (100) is configured as a near field communication, NFC, device, and
wherein the RF signals (111, 112) are configured as NFC signals.

3. The RF communication device (100) according to one of the preceding claims, wherein the RF signals (111, 112) are configured as RF pulses.

4. The RF communication device (100) according to one of the preceding claims,
wherein the adaptive detection device (120) is further configured to:
trigger a transmission of a sequence of RF signals (101), that includes the first RF signal (111) and the second RF signal (112).

5. The RF communication device (100) according to claim 4,
wherein a plurality of first RF signals (111) and a plurality of second RF signals (112) are transmitted alternatingly in the RF sequence (101).

6. The RF communication device (100) according to claim 4 or 5, comprising at least one of the following features:
wherein one first RF signal (111) and one second RF signal (112) are transmitted alternatingly;
wherein two or more first RF signals (111) and two or more RF signals (112) are transmitted alternatingly.

7. The RF communication device (100) according to one of the preceding claims,
wherein the first RF signal (111) and the second RF signal (112) are transmitted as an extended pulse with different energy levels.

8. The RF communication device (100) according to one of the preceding claims,
wherein the adaptive detection device (120) is further configured to:
perform a calibration with respect to the first energy level of the first RF signal (111) and the second energy level of the second RF signal (112).

9. An RF communication system (150), comprising:
an RF communication device (100) according to one of claims 1 to 8; and
the at least one further RF communication device (130, 140).

10. The RF communication system (150) according to claim 9,
wherein the at least one further RF communication device (140) is configured as a passive device.

11. The RF communication system (150) according to claim 9 or 10,
wherein the at least one further RF communication device (130) is configured as an active scanning device.

12. The RF communication system (150) according to claim 10 or 11, comprising at least one of the following features:
wherein the first RF signal (111) is optimized to detect the active device (130);
wherein the second RF signal (112) is optimized to detect the passive device (140);

13. The RF communication system (150) according to one of claims 9 to 12,
wherein the further RF communication device (130, 140) is configured as at least one of: an RFID device, an NFC device, a tag, a credit card, a debit card, a mobile phone, a proximity inductive coupling card, PICC.

14. A method for operating a radio frequency, RF, communication system (150), the method comprising:
transmitting a first RF signal (111);
transmitting a second RF signal (112); and
detecting at least one of:
an active further RF communication device (130) based on the first RF signal (111),
a passive further RF communication device (140) based on the second RF signal (112);
wherein one of first RF signal (111) and the second RF signal (112) is transmitted subsequently to the other, and
wherein a first energy level of the first RF signal (111) is at least 25% higher than a second energy level of the second RF signal (112).

15. The method according to claim 14, further comprising at least one of the following features:
receiving the first RF signal (111) by the active RF communication device (130), and then starting a first wake-up operation;
receiving the second RF signal (112) by the passive RF communication device (140) and then starting a second wake-up operation.

## Amended claims

### Amended claims in accordance with Rule 137(2) EPC.

1. A radio frequency, RF, communication device (100) for detecting an active further RF communication device (130) and
a passive further RF communication device (140),
the RF communication device (100) comprising:
an RF transmission device (110), configured to transmit RF signals to be received by the at least one further RF communication device (130, 140); and
an adaptive detection device (120), coupled to the RF transmission device (110), and configured to:
trigger a transmission of a first RF signal (111),
trigger a transmission of a second RF signal (112), and
detect
the active further RF communication device (130) based on the first RF signal (111) and
the passive further RF communication device (140) based on the second RF signal (112); wherein one of the first RF signal (111) and the second RF signal (112) is transmitted subsequently to the other, and
wherein a first energy level of the first RF signal (111) is at least 90% higher than a second energy level of the second RF signal (112).

2. The RF communication device (100) according to claim 1,
wherein the RF communication device (100) is configured as a near field communication, NFC, device, and
wherein the RF signals (111, 112) are configured as NFC signals.

3. The RF communication device (100) according to one of the preceding claims, wherein the RF signals (111, 112) are configured as RF pulses.

4. The RF communication device (100) according to one of the preceding claims, wherein the adaptive detection device (120) is further configured to:
trigger a transmission of a sequence of RF signals (101), that includes the first RF signal (111) and the second RF signal (112).

5. The RF communication device (100) according to claim 4,
wherein a plurality of first RF signals (111) and a plurality of second RF signals (112) are transmitted alternatingly in the RF sequence (101).

6. The RF communication device (100) according to claim 4 or 5, comprising at least one of the following features:
wherein one first RF signal (111) and one second RF signal (112) are transmitted alternatingly;
wherein two or more first RF signals (111) and two or more RF signals (112) are transmitted alternatingly.

7. The RF communication device (100) according to one of the preceding claims, wherein the first RF signal (111) and the second RF signal (112) are transmitted as an extended pulse with different energy levels.

8. The RF communication device (100) according to one of the preceding claims, wherein the adaptive detection device (120) is further configured to:
perform a calibration with respect to the first energy level of the first RF signal (111) and the second energy level of the second RF signal (112).

9. An RF communication system (150), comprising:
an RF communication device (100) according to one of claims 1 to 8; and
the active further RF communication device (130) and the passive further RF communication device (140).

10. The RF communication system (150) according to claim 9, comprising at least one of the following features:
wherein the first RF signal (111) is optimized to detect the active further RF communication device (130);
wherein the second RF signal (112) is optimized to detect the passive further RF communication device (140);

11. A method for operating a radio frequency, RF, communication system (150), the method comprising:
transmitting a first RF signal (111);
transmitting a second RF signal (112); and
detecting
an active further RF communication device (130) based on the first RF signal (111) and
a passive further RF communication device (140) based on the second RF signal (112); wherein one of first RF signal (111) and the second RF signal (112) is transmitted subsequently to the other, and
wherein a first energy level of the first RF signal (111) is at least 90% higher than a second energy level of the second RF signal (112).

12. The method according to claim 11, further comprising at least one of the following features:
receiving the first RF signal (111) by the active RF communication device (130), and then starting a first wake-up operation;
receiving the second RF signal (112) by the passive RF communication device (140) and then starting a second wake-up operation.
